(19) Europäisches Patentamt

European Patent Office

Office européen des brevets

(11) **EP 1 298 000 B1**

(12) **EUROPEAN PATENT SPECIFICATION**

(45) Date of publication and mention
of the grant of the patent:
**14.06.2006 Bulletin 2006/24**

(51) Int Cl.:
***B60R 1/00*** *(2006.01)*

(21) Application number: **02021545.5**

(22) Date of filing: **26.09.2002**

(54) **Vehicle monitoring system**

Fahrzeugüberwachungssystem

Système de surveillance de véhicule

(84) Designated Contracting States:
**DE FR GB**

(30) Priority: **27.09.2001 JP 2001297361**

(43) Date of publication of application:
**02.04.2003 Bulletin 2003/14**

(73) Proprietor: **AISIN SEIKI KABUSHIKI KAISHA
Kariya-shi, Aichi-ken (JP)**

(72) Inventor: **Kakinami, Toshiaki
Midori-ku,
Nagoya-shi,
Aichi-ken (JP)**

(74) Representative: **TBK-Patent
Bavariaring 4-6
80336 München (DE)**

(56) References cited:
**EP-A- 1 102 226        US-A- 4 978 983
US-A- 5 646 614        US-A1- 2001 006 554**

**Description**

## FIELD OF THE INVENTION

This invention generally relates to a vehicle monitoring system according to the preamble of claim 1.

## BACKGROUND OF THE INVENTION

Conventionally, a vehicle monitoring system, which photographs a view field of the moving direction (backward direction, for example) of a vehicle using a photographing device (a camera and the like) and displays the picture image thereof on a displaying device (a monitor screen and the like) installed in a compartment of the vehicle, has been known in order to confirm a safe parking operation.

However, for the vehicle monitoring system, the camera, which is installed in the rear portion of the vehicle so as to photograph the backward direction, has to be installed in a displaced position from a main axis of the anterior-posterior directions of the vehicle due to designing restriction of the vehicle in order to avoid interference with a part such as a back-door handle, a lock mechanism, a license lamp, or a lighting system.

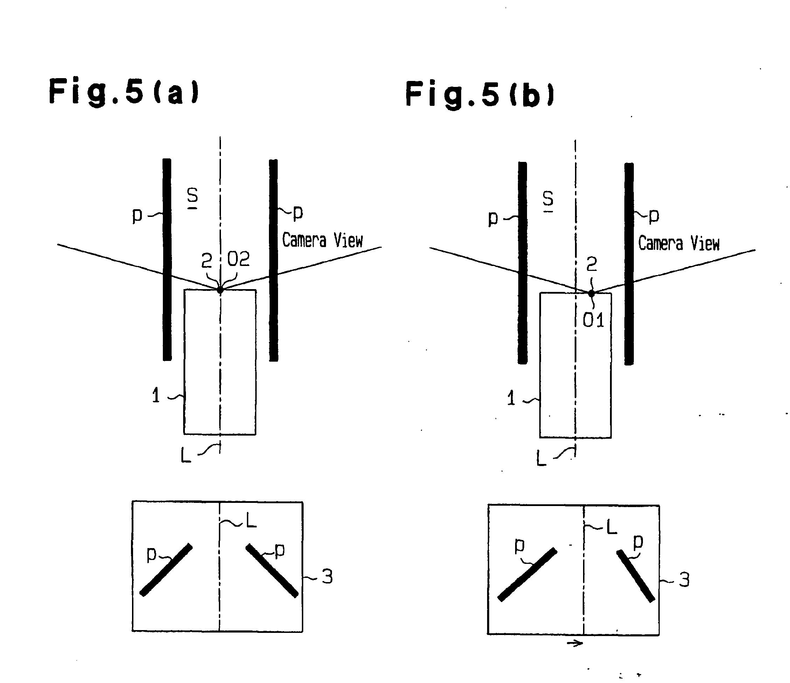

Therefore, as shown in FIG. 5a, when the main axis (hereinafter referred to as a "vehicle main axis") L of the vehicle 1 in the anterior-posterior directions is nearly the same as a main axis of a parking lot S divided by a pair of parking lot lines p, if the camera 2 is mounted in a position O2 of a vertical surface containing the vehicle main axis L, the picture images that are photographed by a camera 2 becomes nearly left-to-right symmetric and they are displayed in a monitor screen 3. Each of a pan angle and a roll angle can be defined as nearly zero and further the optical axis of the camera 2 can have a predetermined tilt angle. In other words, the camera 2 is installed in order for the optical axis thereof to be set in a vertical surface containing the vehicle main axis L.

However, as shown in FIG. 5b, if the camera is installed in the shifted position from the vertical surface containing the above-mentioned vehicle main axis L, the picture images photographed by the camera 2 thereof do not become left-to-right symmetric and the picture images thereof are displayed on the monitor screen 3 of the compartment of the vehicle even if the above-mentioned vehicle main axis L nearly agrees with the main axis of the parking lot S. This means that the coordinate system of the camera 2 has a parallel movement component T and a rotational component R on the world coordinate system. Accordingly, uncomfortable feeling is given to a driver about the position of driver's own vehicle 1 for the parking lot S on the monitor screen 3.

Furthermore, the state of the document US 2001/006554 A1 relates to an on-vehicle camera calibration device and a camera calibration method for setting camera parameters by using the window with the camera being positioned in the center of the vehicle with respect to the symmetric main axis. According to this prior art, the method calibrates the camera when it is mounted on a vehicle.

EP 1 270 329 A2, a document cited under Article 54(3) EPC, is concerned with a monitoring system for providing a safe driving environment.

## SUMMARY OF THE INVENTION

The object of the present invention is to suppress uncomfortable feeling caused by difference between driver's own vehicle of a picture image based on a view field of the moving directions of a vehicle, which are displayed in the compartment of the vehicle, and the real position of driver's own vehicle. The object is solved by a vehicle monitoring system having the features of claim 1. Further developments are set out in the dependent claims.

According to one aspect of the invention, a vehicle monitoring system includes a photographing device for photographing a view field of a moving direction of a vehicle as a first view point, a transforming device for transforming a picture image of the first view point photographed by the photographing device into a picture image as a second view point different from the first view point, and a displaying device for displaying the picture image viewed from the second view point transformed in a compartment of the vehicle, in which the second view point and an optical axis are set in a vertical surface containing a vehicle main axis.

According to another aspect of the invention, the moving direction of the vehicle includes at least one of backward and forward directions of the vehicle.

## BRIEF DESCRIPTION OF THE DRAWING FIGURES

The foregoing and additional features and characteristics of the present invention will become more apparent from the following detailed description considered with reference to the accompanying drawing figures wherein:

Fig. 1 is a block diagram of one embodiment of a vehicle monitoring system of the present invention;

FIG. 2 illustrates a vehicle that installs the embodiment of the vehicle monitoring system of FIG. 1;

FIG. 3 is an explanatory view of transforming a picture image of a camera at the first view point into a picture image viewed from the second view point according to the embodiment of the invention;

FIG. 4 is an explanatory view of the world coordinate system, the camera coordinate system, and the picture image coordinate system used in the embodiment of the invention; and

FIGS. 5a and 5b are outlined views of installing position of the camera and the picture image on the monitor screen according to the embodiment of the invention.

## DETAILED DESCRIPTION OF THE INVENTION

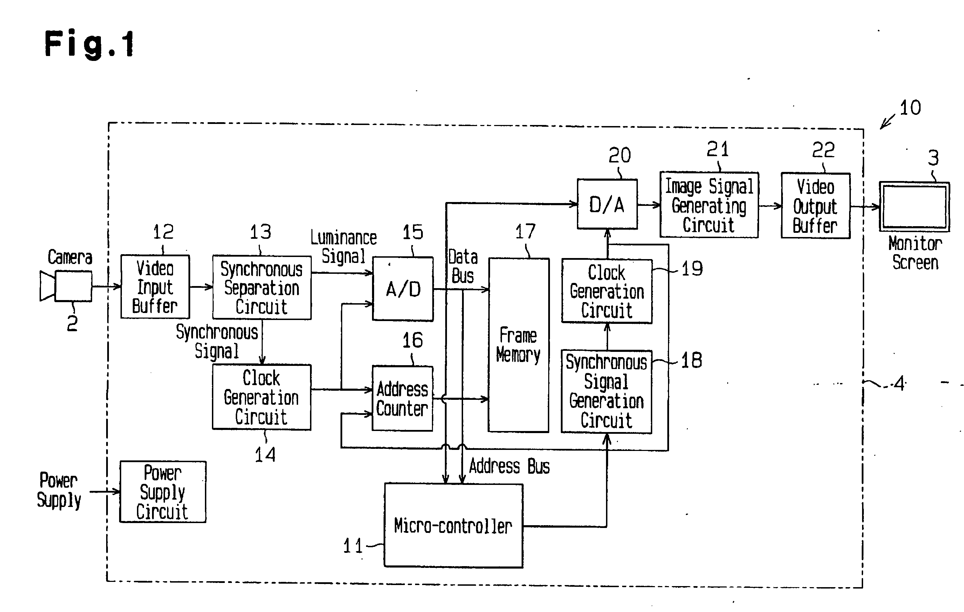

The embodiment of the present invention is explained hereinafter with reference to FIGS. 1 to 5.

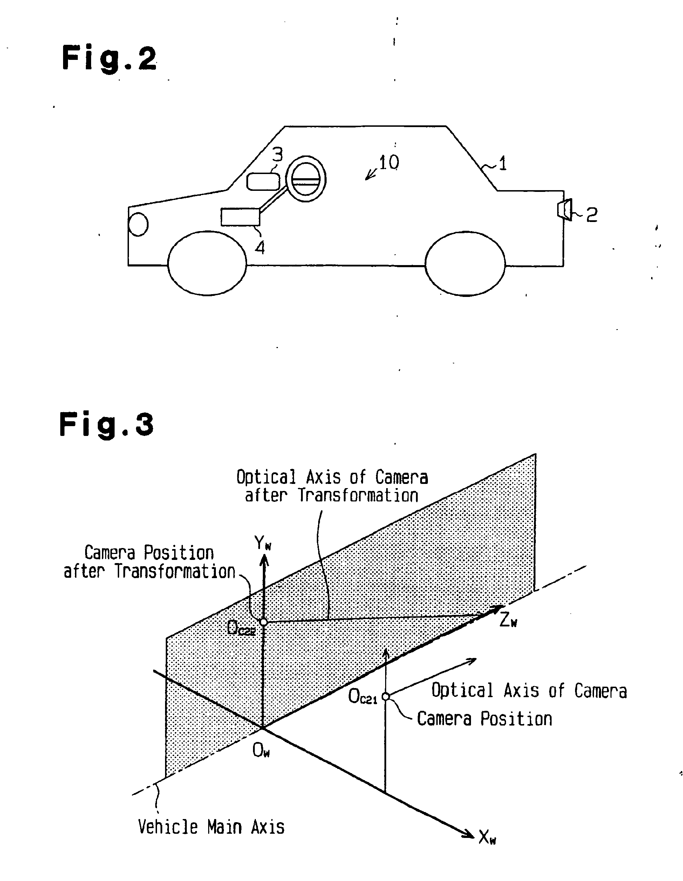

FIG. 2 is a block diagram of a vehicle 1 mounting a vehicle monitoring system 10 of the present embodiment. As indicated in the figure, this vehicle monitoring system 10 functions as one of photographing devices and is equipped with a camera (CCD camera) 2 for monitoring a back view field of the vehicle, a monitor screen 3, and a controller 4.

The camera 2 is mounted in the position 01 (refer to FIG. 5b) shifted from a vertical surface including a vehicle main axis L in the rear portion of the vehicle 1, the optical axis thereof is set downwardly in the lower portion. The vertical surface crosses with a width direction of the vehicle 1 and is defined as a surface provided in the height direction. This camera 2 itself has a view field of 140 degrees in the right and left directions, for example, and can photograph in a range within the backward 8 meters depth in this embodiment.

The monitor screen 3 is set on the main console of a vehicle compartment, for example. On this monitor screen, the backward picture image of the vehicle photographed by the camera is displayed.

The controller 4 is provided in the inside of an instrumental panel, for example, and the backward picture image of the vehicle 1 is displayed on the monitor screen 3 based on an image signal (picture image signal) from the camera 2.

FIG. 1 is a block diagram of the system of the vehicle monitoring system 10. As indicated in the figure, there are provided a micro-controller 11 as a main part therefor, a video input buffer 12, a synchronous separation circuit 13, a clock generation circuit 14, an A/D (Analog/Digital) conversion circuit 15, an address counter 16, a frame memory 17, a synchronous signal generation circuit 18, a clock generation circuit 19, a D/A converter 29, an image signal generating circuit 21, and a video output buffer 22 inside the controller 4 for controlling the vehicle monitoring system 10.

The synchronous separation circuit 13 separates the picture image (raw picture image) input from the camera (CCD camera) 2 by way of the video input buffer 12 into a synchronous signal and a luminance signal. Then, the synchronous separation circuit 13 outputs the synchronous signal to the clock generation circuit 14 and then outputs the luminance signal to the A/D conversion circuit 15.

The clock generation circuit 14 generates sampling clocks based on the synchronous signal. Then, the clock generation circuit 14 outputs the sampling clocks to the A/D conversion circuit 15 and the address counter 16.

The A/D conversion circuit 15 digitally converts the luminance signal from the synchronous separation circuit 13 based on the sampling clocks and then inputs to the frame memory 17 by way of a data bus. On the other hand, the address counter 16 increments sequentially addresses based on the sampling clocks and then inputs to the frame memory 17 by way of an address bus. Accordingly, data (luminance signal) corresponding to respective addresses of the frame memory 17 defined by the address counter 16 are memorized and then stored in the same frame memory 17 as picture image data for the raw picture image of the camera 2.

The micro-controller 11 reads the picture image data (picture image data for the raw data) stored in the frame memory 17 by way of the data bus and the address bus and then performs a coordinate transformation process of the embodiment that is described in the latter part of the specification. Then, the micro-controller 11 stores the picture image data, to which the coordinate transformation process has been performed, in the frame memory 17 separately by way of the data bus and the address bus.

The synchronous signal generation circuit 18 generates synchronous signals based on an enable signal from the micro-controller 11 and then outputs to the clock generation circuit 19. Then, the clock generation circuit 19 generates the sampling clocks based on the synchronous signals and then outputs to the D/A conversion circuit 20 and the address counter 16.

The address counter 16 increments the addresses sequentially based on the sampling clocks and inputs to the frame memory 17 by way of the address bus. Accordingly, data (picture image data), which has been processed using the coordinate transformation process, corresponding to the address of the frame memory 17 set by the address counter 16 are output to the D/A conversion circuit 20 by way of the data bus. Then, the D/A conversion circuit 20 performs an analog transformation process to data, to which the coordinate transformation process has been performed, based on the sampling clocks and then outputs to the image signal generating circuit 21.

The image signal generating circuit 21 generates the picture image signal based on the signal from the D/A conversion circuit 20 and then outputs to the monitor screen 3 by way of the video output buffer 22. Accordingly, the picture image, in which the coordinate transformation process has been performed to the raw picture image of the camera 2, is displayed on the monitor screen 3.

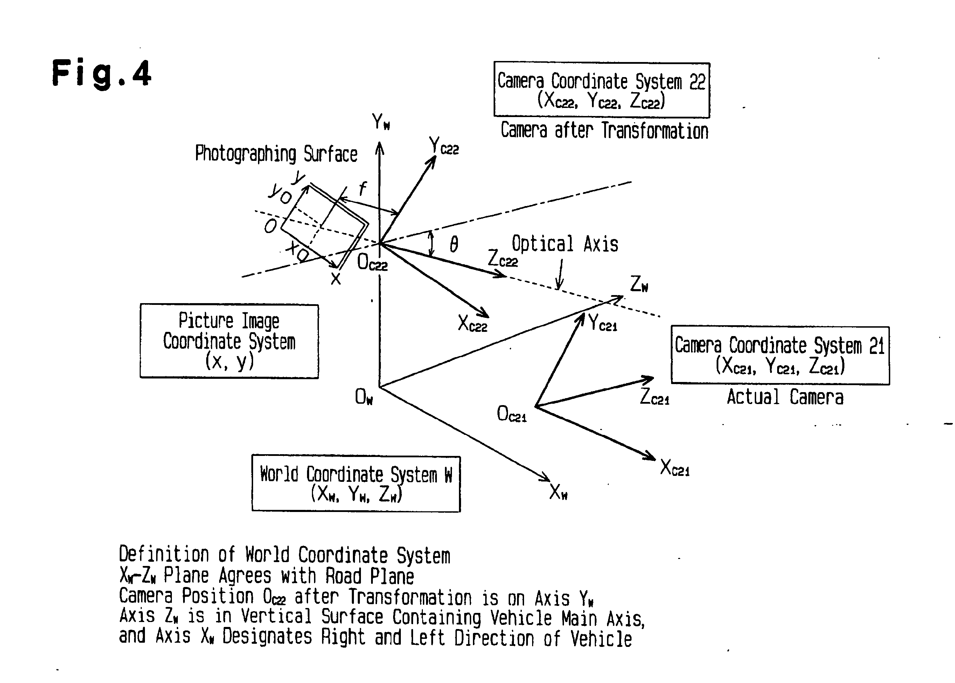

Then, a geometrical transformation process in accordance with the coordinate transformation process by the micro-controller 11 is roughly explained with reference to FIGS. 3 and 4.

FIG. 4 is an explanatory view of relationships among the camera coordinate system (Xc, Yc, Zc) defined using the camera as an origin, the world coordinate system (Xw, Yw, Zw) as the base coordinate, and the picture image coordinate system (X, Y) in which the picture image is photographed on the monitor screen 3. Here, it is known that the camera coordinate system can be transformed from the world coordinate system by three dimensional rotation R and parallel movement T in the following mathematical expression 1.

$$X_c = RX_W + T \quad \cdots\cdots\cdots\cdots\cdots\cdots\cdots \quad 1$$

where,

$$Xc = \begin{pmatrix} Xc \\ Yc \\ Zc \end{pmatrix}, \quad Xw = \begin{pmatrix} Xw \\ Yw \\ Zw \end{pmatrix}$$

The mathematical expression 1 is expressed in the following mathematical expression 2 using a 4 x 4 matrix in which the rotation R and the parallel movement T are combined.

$$\begin{bmatrix} Xc \\ Yc \\ Zc \\ 1 \end{bmatrix} = \begin{bmatrix} R & T \\ O^T & 1 \end{bmatrix} \begin{bmatrix} Xw \\ Yw \\ Zw \\ 1 \end{bmatrix} \quad \cdots\cdots\cdots\cdots\cdots \quad 2$$

Three dimensional rotation R is expressed in the following mathematical expression 3 by employing a rolling angle $\theta_z$, a pan angle $\theta_y$, and a tilt angle $\theta_x$ as respective rotational components to each coordinate. Further, the three dimensional parallel movement T is expressed in the following mathematical expression 4 by employing each of parallel movement components Tx, Ty, and Tz to each coordinate.

$$\cdots\cdots\cdots\cdots\cdots\cdots\cdots\cdots\cdots\cdots \quad 3$$

$$[R] = \begin{bmatrix} COS\theta_y COS\theta_z + SIN\theta_y SIN\theta_x SIN\theta_z & -COS\theta_y SIN\theta_z + SIN\theta_y SIN\theta_x COS\theta_z & SIN\theta_y COS\theta_x & 0 \\ COS\theta_x SIN\theta_z & COS\theta_x SIN\theta_z & -SIN\theta_x & 0 \\ -SIN\theta_y COS\theta_z + COS\theta_y SIN\theta_x SIN\theta_z & SIN\theta_y SIN\theta_z + COS\theta_y SIN\theta_x COS\theta_z & COS\theta_y SIN\theta_x & 0 \\ 0 & 0 & 0 & 1 \end{bmatrix}$$

$$[T] = \begin{bmatrix} 1 & 0 & 0 & T_x \\ 0 & 1 & 0 & T_y \\ 0 & 0 & 1 & T_z \\ 0 & 0 & 0 & 1 \end{bmatrix} \quad \cdots\cdots\cdots\cdots \quad 4$$

Then, a point (Xw, Yw, Zw) for the world coordinate system is projected to a point m = (X, Y, 1) for the picture image coordinate system by combining three dimensional rotation R and parallel movement T as indicated in the following mathematical expression 5.

$$m = \begin{bmatrix} x \\ y \\ 1 \end{bmatrix} = C \begin{bmatrix} 1 & 0 & 0 & 0 \\ 0 & 1 & 0 & 0 \\ 0 & 0 & 1 & 0 \end{bmatrix} \begin{bmatrix} R & T \\ 0^T & 1 \end{bmatrix} \begin{bmatrix} X_w \\ Y_w \\ Z_w \\ 1 \end{bmatrix}$$

$$= C[R \mid T] \begin{bmatrix} X_w \\ Y_w \\ Z_w \\ 1 \end{bmatrix} \quad \cdots\cdots \quad 5$$

A matrix C is a built-in parameter matrix of the camera and a known matrix corresponding to the characteristic of the camera 2 to be mounted.

Then, with reference to a conversion pattern to m = (X, Y, l) of the picture image coordinate system from the point (Xw, Yw, Zw) of this kind of world coordinate system, a transformation pattern, in which the picture image of the camera 2 which is provided at the position O1 (hereinafter referred to the first view point O1) is transformed to the picture image viewed from the position O2 (hereinafter referred to the second view point O2), is explained with reference to FIG. 3. The second view point O2 and an optical axis of FIG. 3 are set in a perpendicular surface including a vehicle main axis L. The world coordinate system W is the general three dimensional space coordinate, in other words, coordinates indicating three dimensional space in which the vehicle exists. In other words, the camera 2 exists on the world coordinate system W (refer to FIG. 3). Further, as shown in FIG. 3, the camera 2 has the independent camera coordinate system 21 on the world coordinate system W. A predetermined related positional condition exists, which is defined by the position of the vehicle on the world coordinate system W and an installing position of the camera 2 to the vehicle between this camera coordinate system 21 and the world coordinate system W. However, in this embodiment, to give a simple explanation, the original point Ow of the world coordinate system W is set in a gravity center of the vehicle and explanation is made by supposing that three dimensional space, in which a vehicle's main axis, the right and left directions of the vehicle, and the height direction of the vehicle (vertical direction to a flat surface in which the vehicle exists) are defined as a Zw axis, an Xw axis, and a Y axis respectively.

Obviously as explained in the description, the original point $O_{c21}$ of the camera coordinate system 21 is decided by a mounting position of the.camera 2 to the gravity point of the vehicle in the world coordinate system W. In other words, the decision is made by identifying how far the mounting position of the camera 2 is positioned in the anterior-posterior, left-to-right, and height directions of the vehicle from the gravity center position of the vehicle. Then, the predetermined camera coordinate system 21 is decided by two straight lines that are orthogonal to the optical axis and the optical axis of the camera 2 from this original point $O_{c21}$. However, in the present embodiment, the optical axis of the camera is defined as a $Z_{c21}$ axis of the camera in the camera coordinate system 21. The picture image that has been photographed by the camera 2 is projected in a photographed surface that is orthogonal to the optical axis ($Z_{c21}$ axis) of the camera.

It is known that transformation can be performed in order for the camera coordinate system 21 to exist in any position of the world coordinate system W using a parallel movement component T and the rotational component R of the camera 2 (refer to the mathematical expressions 1 and 2). The world coordinate system W and the image signal generating circuit 21 are defined as shown in the description, thus the parallel movement components T (refer to the mathematical expression 4) become the position coordinates of mounting the camera for the standard position (vehicle's gravity center in the example) and then become known data. Further, the tilt angle $\theta_x$, the pan angle $\theta_y$, and the rolling angle $\theta_z$ of the rotation component R (refer to the mathematical expression 3) can be defined as known data from designed data for a mounting angle of the camera 2.

Further, when the coordinates are transformed using this mathematical expression 5, among the parallel movement components T, components (X component) in the Xw axis direction are adjusted (X component is defined as 0 in this example), which indicate that the mounting position of the camera 2 is shifted in the right and left directions of the vehicle to vehicle's main axis so as to position on the vehicle's main position (in other words, the original point $O_{c21}$ of the camera coordinate system 21 exists on the flat surface passing through the $Z_w$ axis of the world coordinate system W). Accordingly, the result of transforming the coordinates can be a coordinate that the camera 2 is positioned on the flat surface containing the vehicle main axis L, in other words, as shown in FIGS. 3 and 4, the camera coordinate system 22 is obtained, in which the original point $O_{c22}$ exists on the flat surface (in other words, on the flat surface passing through the vehicle main axis) passing through the $Z_w$ axis of the world coordinate system W. If the coordinate transformation process is performed based on the transformation formula, the picture image photographed by the camera coordinate system 21 is transformed into the picture image which is projected to the picture image coordinate system X that is orthogonal to the optical axis ($Z_{c22}$ axis) of the camera of the camera coordinate system 22. Accordingly, even if the camera is mounted in any place, the picture image can be obtained in the same way as if the camera 2 were placed on the flat surface passing through the vehicle main axis.

Data, which are stored in the frame memory 17 using the coordinate transformation process by the microcontroller 11 based on the geometrical transformation process, are output to the D/A conversion circuit 20. Accordingly, notwithstanding the first view point 01 (the position of the camera 2), the picture image that is displayed on the monitor screen 3 becomes approximately equal to the picture image in which the backward view of the vehicle 1 is photographed by providing the camera 2 in the vertical surface containing the vehicle main axis L (refer to the monitor screen of FIG. 5a).

Obviously as explained in the description, according to the present embodiment, the following effects can be obtained.

(1) In the present embodiment, the backward view picture image of the vehicle 1 photographed at the first view point O1 is transformed into the picture image viewed from the second view point O2 different from the first view point O1 and then displayed in the compartment of the vehicle. Then, the second view point O2 and the optical axis are set in the vertical surface containing the vehicle main axis L. Therefore, the picture image displayed in the compartment of the vehicle, notwithstanding the first view point O1 (the position of the camera 2), becomes nearly equal to the picture image in which the backward view field of the vehicle 1 is photographed by providing the camera 2 in the vertical surface containing the vehicle main axis L. Therefore, a three dimensionally left-to-right symmetric object to the vehicle main axis L, for example, is displayed as nearly left-to-right symmetric picture images on the monitor screen 3, thus uncomfortable feeling can be suppressed to the same picture image. Then, the left and right situations of the vehicle 1 can be imagined based on the vehicle main axis L on the monitor screen 3.

The picture image of the view field in the moving direction of the vehicle which has been photographed at the first view point is transferred into the picture image viewed from the second view point different from the first view point. Then, these second viewpoint and optical axis are set in the vertical axis containing the vehicle main axis. Therefore, the picture image displayed in the compartment of the vehicle, notwithstanding the first view point (the position of the photographing device), is nearly the same as the picture image for which the photographing device is positioned in the vertical surface containing the vehicle main axis and the view field in the moving direction of the vehicle is photographed. In this way, the nearly three dimensionally left-to-right symmetrical object is displayed on the displaying device as the left-to-right symmetrical object, thus uncomfortable feeling to the picture image thereof can be suppressed.

(2) The present embodiment can solve a problem in which the actual vehicle main axis.L is shifted from the main axis of a parking lot S in the case that the vehicle 1 is operated and arranged in order for a pair of parking lot lines p to be displayed in a left-to-right symmetric way for the monitor screen 3 of the compartment of the vehicle.

(3) The present embodiment can improve the degree of freedom of designing mechanisms and/or a design of the vehicle 1, since the camera 2 is not necessarily provided in the vertical surface containing the vehicle main axis L.

(4) In the present embodiment, the picture image displayed in the compartment of the vehicle becomes nearly equal to the picture image in which the backward view field of the vehicle 1 is photographed by providing the camera 2 in the vertical surface containing the vehicle main axis L, notwithstanding the first view point O1 (the position of the camera 2). Therefore, the vehicle 1 is parked and operated without having any uncomfortable feeling.

The embodiment of the present invention is not limited to the embodiment, but may be modified in the following way.

The embodiment can be structured, in which the embodiment can display the picture image of the camera (backward view field) only when a reverse switch of a shift lever (select lever), for example, is turned ON although an operating condition, for displaying the picture image on the monitor screen 3, of the vehicle 1 is not referred specifically. In this case, a generally unnecessary backward view field can avoid displaying on the monitor screen 3 except the vehicle moves back.

In the embodiment, explanation is made for the vehicle monitoring system 10 for monitoring the backward direction of the vehicle 1 by providing the camera 2 in the rear portion of the vehicle 1. On the other hand, a vehicle monitoring system for monitoring the forward direction of the vehicle 1 can be structured by providing the camera in the front portion of the vehicle 1. Otherwise, a vehicle monitoring system for monitoring the anterior-posterior directions of the vehicle 1 can be structured.

In the embodiment, the present invention can also be applied to a parking assist system for supporting driver's parking operation by depicting a forecasted running trail in a duplicate way. In this case, a driver can be assisted without accepting any uncomfortable feeling for the parking operation. Further, the parking operation can be performed easily since the forecasted running trail of the vehicle 1 is displayed on the monitor screen 3.

The following is further advantage of the invention:

(a) In the case of photographing and displaying the backward view field of the vehicle, for example, the vehicle monitoring system can avoid displaying an unnecessary backward view field on the monitor screen 3 except the vehicle moves back.

(b) The vehicle monitoring system can assist driver's parking operation without any uncomfortable feeling.

(c) The parking assist system is characterized in that a forecasted running trail is depicted in the displaying device in a duplicate way. According to the structure thereof, it becomes easy to perform the parking operation since the forecasted running trail is depicted in the displaying device.

Obviously explained in the above-mentioned description, uncomfortable feeling can be suppressed, which has been caused by difference between driver's own vehicle of the picture image based on the forward view field of the vehicle, which is displayed in the compartment of the vehicle, and the real position of driver's own vehicle.

A vehicle monitoring system capable of suppressing uncomfortable feeling caused by relationships between driver's own vehicle of the picture image based on the forward view field of the vehicle, which is displayed in the compartment of the vehicle, and the real position of driver's own vehicle. A camera for photographing the backward view field at the first view point is provided in the rear portion of the vehicle. A controller transforms a picture image of the first view point photographed by the camera into a picture image as a second view point different from the first view point. The monitor screen displays the picture image viewed from the second view point that has been transformed. The second view point and an optical axis are set in a vertical surface containing a vehicle main axis.

**Claims**

1. A vehicle monitoring system (10) comprising:

a photographing means (2) for photographing a view field of a moving direction of a vehicle as a first view point ($O_{c21}$) on a first optical axis;
a transforming means for transforming a picture image of the first view point ($O_{c21}$) photographed by the photographing means (2) into a picture image as a second view point ($O_{c22}$) on a second optical axis different from the first view point ($O_{c21}$); and
a displaying means for displaying the picture image viewed from the second view point ($O_{c22}$) on a second optical axis transformed in a compartment of the vehicle,
**characterized in that**
the second view point ($O_{c22}$) is transformed by three-dimensional transformation and the second view point ($O_{c22}$) and the optical axis of the second view point ($O_{c22}$) are set in a vertical plane containing a vehicle main axis in an anterior-posterior direction of the vehicle.

2. The vehicle monitoring system according to claim 1, wherein:

the moving direction of said vehicle includes at least one of backward and forward directions of said vehicle.

**3.** The vehicle monitoring system according to claim 1,
wherein:

the displaying means displays the picture image viewed from the second view point when a reverse switch of a shift lever is turned to be ON.

**4.** The vehicle monitoring system according to claim 1, wherein the vehicle monitoring system further comprises a forecasted running trail depicted in the displaying means in a duplicate way so as to perform parking operation.

**5.** The vehicle monitoring system according to claim 1, wherein the transforming means transforms by using a parallel movement component and a rotational component.

**6.** The vehicle monitoring system according to claim 5, wherein the parallel movement component is defined by elements known from position coordinates of mounting the photographing means (2).

**7.** The vehicle monitoring system according to claim 5, wherein the rotational component including a tilt angle $\Theta x$, a pan angle $\Theta y$ and a rolling angle $\Theta z$ are known data obtained from a mounting angle of the photographing means (2).


**Patentansprüche**

**1.** Fahrzeugüberwachungssystem (10) mit:

einer fotografischen Aufnahmeeinrichtung (2) zum fotografischen Aufnehmen eines Blickfelds in Fahrzeugbewegungsrichtung als einen ersten Blickpunkt ($O_{c21}$) an einer ersten optischen Achse;
einer Transformationseinrichtung zum Transformieren eines Bildes von dem ersten Blickpunkt ($O_{c21}$), der von der fotografischen Aufnahmeeinrichtung (2) fotografisch aufgenommen wurde, in ein Bild als zweiten Blickpunkt ($O_{c22}$) an einer zweiten optischen Achse, der sich von dem ersten Blickpunkt ($O_{c21}$) unterscheidet; und
einer Anzeigeeinrichtung zum Anzeigen des Bildes, wie es von einem zweiten Blickpunkt ($O_{c22}$) an einer zweiten optischen Achse aus betrachtet wird, das in ein Fahrzeugabteil transformiert wurde,
**dadurch gekennzeichnet, dass**
der zweite Blickpunkt ($O_{c22}$) an einer zweiten optischen Achse durch eine dreidimensionale Transformation transformiert wird und der zweite Blickpunkt ($O_{c22}$) und die optische Achse des zweiten Blickpunkts ($O_{c22}$) in einer vertikalen Ebene liegen, die eine Fahrzeughauptachse in einer Längsrichtung des Fahrzeugs enthält.

**2.** Fahrzeugüberwachungssystem gemäß Anspruch 1, wobei:

die Bewegungsrichtung des Fahrzeugs zumindest eine nach rückwärts gerichtete oder eine nach vorwärts gerichtete Richtung des Fahrzeugs aufweist.

**3.** Fahrzeugüberwachungssystem gemäß Anspruch 1, wobei:

die Anzeigeeinrichtung das von dem zweiten Blickpunkt aus gesehene Bild anzeigt, wenn ein Rückwärtsschalter eines Schalthebels so geschaltet wird, dass er AN ist.

**4.** Fahrzeugüberwachungssystem gemäß Anspruch 1, wobei das Fahrzeugüberwachungssystem ferner einen vorhergesagten Laufpfad aufweist, der in der Anzeigeeinrichtung in zweifacher Weise dargestellt ist, um eine Einparktätigkeit durchzuführen.

**5.** Fahrzeugüberwachungssystem gemäß Anspruch 1, wobei die Transformationseinrichtung transformiert, indem sie eine Parallelbewegungskomponente und eine Rotationskomponente verwendet.

**6.** Fahrzeugüberwachungssystem gemäß Anspruch 5, wobei die Parallelbewegungskomponente durch Elemente definiert ist, die aus Positionskoordinaten der Befestigung der fotografischen Aufzeichnungseinrichtung (2) bekannt sind.

**7.** Fahrzeugüberwachungssystem gemäß Anspruch 5, wobei die Rotationskomponente, die einen Kippwinkel $\Theta$x, einen Schwenkwinkel $\Theta$y und einen Rollwinkel $\Theta$z aufweist, die bekannte Werte sind, die aus dem Befestigungswinkel der fotografischen Aufzeichnungseinrichtung (2) erhalten sind.

**Revendications**

**1.** Système de surveillance de véhicule (10) comprenant :

un moyen de photographie (2) pour photographier un champ de vision d'un sens de déplacement d'un véhicule comme un premier point de vue ($O_{c21}$) sur un premier axe optique ;
un moyen de transformation pour transformer une image du premier point de vue ($O_{c21}$) photographié par le moyen de photographie (2) en une image comme un deuxième point de vue ($O_{c22}$) sur un deuxième axe optique différent du premier point de vue ($O_{c21}$) ; et
un moyen d'affichage pour afficher l'image vue depuis le deuxième point de vue ($O_{c22}$) sur un deuxième axe optique transformé dans un compartiment du véhicule,
**caractérisé en ce que**
le deuxième point de vue ($O_{c22}$) est transformé par une transformation en trois dimensions et le deuxième point de vue ($O_{c22}$) et l'axe optique du deuxième point de vue ($O_{c22}$) sont établis dans un plan vertical contenant un axe principal du véhicule dans un sens de l'avant vers l'arrière du véhicule.

**2.** Système de surveillance de véhicule selon la revendication 1, dans lequel :

le sens de déplacement dudit véhicule inclut au moins un parmi un sens vers l'arrière et un sens vers l'avant dudit véhicule.

**3.** Système de surveillance de véhicule selon la revendication 1, dans lequel :

le moyen d'affichage affiche l'image vue depuis le deuxième point de vue lorsqu'un commutateur de marche arrière d'un levier de vitesse est activé.

**4.** Système de surveillance de véhicule selon la revendication 1, dans lequel le système de surveillance de véhicule comprend une trace de conduite prévue représentée sur le moyen d'affichage de manière dupliquée afin d'effectuer une opération de stationnement.

**5.** Système de surveillance de véhicule selon la revendication 1, dans lequel le moyen de transformation transforme en utilisant une composante de déplacement parallèle et une composante de rotation.

**6.** Système de surveillance de véhicule selon la revendication 5, dans lequel la composante de déplacement parallèle est définie par des éléments connus à partir des coordonnées de position de montage du moyen de photographie (2)

**7.** Système de surveillance de véhicule selon la revendication 5, dans lequel la composante de rotation incluant un angle d'inclinaison $\theta$x, un angle panoramique $\theta$y et un angle de roulement $\theta$z est un donnée connue obtenue à partir d'un angle de montage du moyen de photographie (2).

# Fig.1

Camera 2

Power Supply

12 Video Input Buffer

13 Synchronous Separation Circuit

Luminance Signal

Synchronous Signal

14 Clock Generation Circuit

15 A/D

16 Address Counter

Data Bus

17 Frame Memory

Address Bus

11 Micro-controller

20 D/A

19 Clock Generation Circuit

18 Synchronous Signal Generation Circuit

21 Image Signal Generating Circuit

22 Video Output Buffer

Power Supply Circuit

10

3 Monitor Screen

4

EP 1 298 000 B1

# Fig.2

# Fig.3

Optical Axis of Camera
after Transformation

Camera Position
after Transformation

$Y_W$

$O_{C22}$

$Z_W$

$O_{C21}$

Optical Axis of Camera

Camera Position

$O_W$

Vehicle Main Axis

$X_W$

# Fig.4

Camera Coordinate System 22
$(X_{c22}, Y_{c22}, Z_{c22})$
Camera after Transformation

Photographing Surface

Picture Image
Coordinate System
$(x, y)$

Optical Axis

Camera Coordinate System 21
$(X_{c21}, Y_{c21}, Z_{c21})$
Actual Camera

World Coordinate System W
$(X_W, Y_W, Z_W)$

Definition of World Coordinate System
$X_W$-$Z_W$ Plane Agrees with Road Plane
Camera Position $O_{c22}$ after Transformation is on Axis $Y_W$
Axis $Z_W$ is in Vertical Surface Containing Vehicle Main Axis,
and Axis $X_W$ Designates Right and Left Direction of Vehicle

EP 1 298 000 B1

# Fig.5(a)

# Fig.5(b)

EP 1 298 000 B1